# FASCICULE DE BREVET EUROPEEN

(11) **EP 3 522 023 B1**
(45) Date de publication et mention de la délivrance du brevet: **11.05.2022**
(21) Numéro de dépôt: 19152909.8
(22) Date de dépôt: 21.01.2019
(51) Int. Cl.: H04B 5/00, G06F 21/60, H04W 88/02, H04W 4/80

(54) **ARCHITECTURE DE MÉMOIRE D'UN DISPOSITIF DE COMMUNICATION EN CHAMP PROCHE**
SPEICHERARCHITEKTUR EINER NAHFELDKOMMUNIKATIONSVORRICHTUNG
MEMORY ARCHITECTURE FOR A NEAR FIELD COMMUNICATION DEVICE

(30) Priorité: 02.02.2018 FR 1850888
(43) Date de publication de la demande: 07.08.2019
(73) Titulaire: STMicroelectronics (Grenoble 2) SAS, 38000 Grenoble (FR); STMICROELECTRONICS (ROUSSET) SAS, 13790 Rousset (FR)
(72) Inventeur: WUIDART, Sylvie, 83910 POURRIERES (FR); MAURICE, Sophie, 38240 MEYLAN (FR)
(74) Mandataire: Cabinet Beaumont

(56) Documents cités:
- EP-A1- 2 890 172
- CN-B- 104 915 696
- US-A1- 2010 131 078
- US-A1- 2017 061 784
- US-B1- 7 026 962

## Description

### Domaine

La présente description concerne les dispositifs de communication en champ proche et plus particulièrement le stockage d'un message à transmettre dans une mémoire d'un tel dispositif.

### Exposé de l'art antérieur

Les téléphones portables et autres types de dispositifs mobiles sont généralement équipés d'interfaces de communication en champ proche (NFC - "Near Field Communication") qui leur permettent d'exécuter des fonctions de transpondeur électromagnétique en plus de leurs autres fonctions. Ces dispositifs sont notamment capables d'émuler les fonctions d'un transpondeur électromagnétique, qu'il soit de type carte sans contact (mode dit "carte") ou de type lecteur sans contact (mode dit "lecteur"). Cette fonctionnalité augmente les possibilités du dispositif mobile en lui permettant d'être utilisé pour diverses applications, par exemple en tant que porte-monnaie électronique permettant de réaliser des paiements, pour accéder à des services tels que les réseaux de transport, etc.

De l'art antérieur il est connu le document US 2010/131078 A1 qui décrit un dispositif comprenant un convertisseur parole-texte qui convertit un message parlé en une représentation numérique (c'est-à-dire du texte ASCII, XML ou un format binaire) et envoie la représentation numérique à l'expéditeur du message ou au générateur de protocole de messagerie instantanée.

Le document EP 2890172 Al décrit des dispositifs communiquant en champ proche, dit "NFC" pour «fear field fommunication». Dans ce document, un dispositif NFC stocke une signature numérique et un identificateur de ressource uniforme (URI) pointant vers un site Web hébergé par un serveur Web. L'URI comprend un compteur qui est incrémenté chaque fois que l'étiquette NFC est lue par un dispositif utilisateur proche du dispositif NFC.

### Résumé

Plusieurs modes de réalisation sont décrits dans la présente description. La portée de l'invention est celle définie par les revendications.

Ainsi, l'invention prévoit un dispositif de communication en champ proche tel que défini par la revendication 1.

Le message stocké est transmis sans conversion.

Le message comprend une partie statique et une partie dynamique.

Selon un mode de réalisation, la partie dynamique est dans une zone à accès restreint de la mémoire.

Selon un mode de réalisation, la partie statique est dans une zone à accès libre de la mémoire.

Selon un mode de réalisation, la partie statique comprend l'adresse d'un site internet.

Selon l'invention, la partie dynamique comprend une donnée fournie par un compteur.

Selon un mode de réalisation, la mémoire comporte une première partie stockant en ASCII la partie variable dudit message à transmettre, la première partie représentant moins de 10 % de la taille de la mémoire.

Selon un mode de réalisation, la mémoire comporte une deuxième partie stockant des données codées en langage hexadécimal.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement, sous forme de blocs, une communication entre deux dispositifs de communication en champ proche ;
la figure 2 représente, sous forme de blocs, une partie d'un dispositif de communication en champ proche , dispositif qui ne fait pas partie de l'invention; et
la figure 3 représente, sous forme de blocs, un mode de réalisation d'une partie d'un dispositif de communication en champ proche selon l'invention.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les dispositifs de communication en champ proche comprennent des composants non représentés, par exemple des mémoires ou des circuits de transmission/réception permettant à un même dispositif d'agir en mode carte ou en mode lecteur selon la situation.

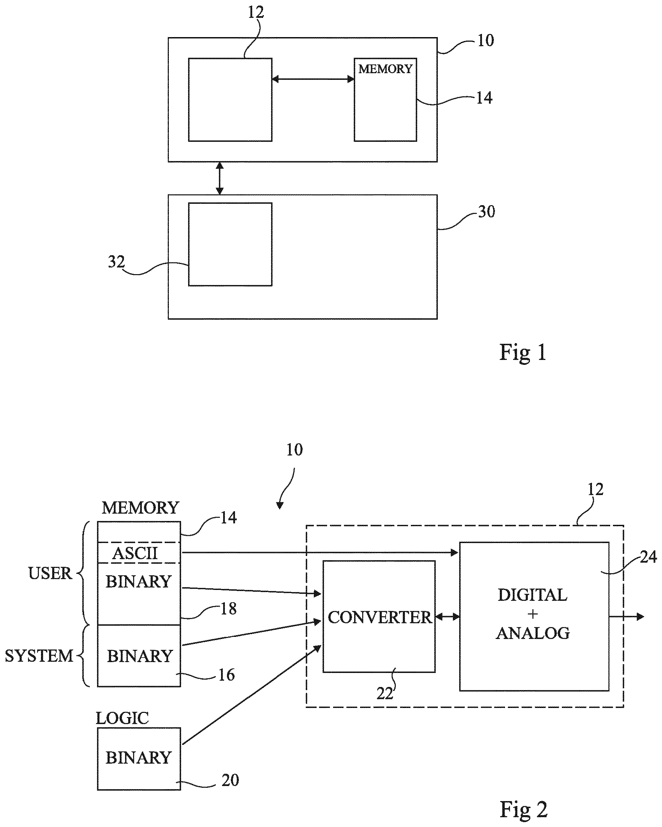

La figure 1 illustre schématiquement, sous forme de blocs, un exemple de communication entre deux dispositifs électroniques 10 et 30 de communication en champ proche.

On suppose le cas où les dispositifs 10 et 30 sont similaires, par exemple sont deux téléphones mobiles, mais tout ce qui va être décrit s'applique plus généralement à tout système dans lequel un transpondeur capte un champ électromagnétique rayonné par un lecteur. En particulier, tout ce qui est décrit s'applique à des systèmes dans lesquels l'un des dispositifs est dédié à fonctionner en mode lecteur et l'autre est dédié à fonctionner en mode carte.

Les dispositifs 10 et 30 sont susceptibles de communiquer par couplage électromagnétique en champ proche. Pour une communication, un des dispositifs, ici le dispositif 30, fonctionne en mode dit lecteur tandis que l'autre, ici le dispositif 10, fonctionne en mode dit carte.

Le dispositif 30 comprend un bloc 32 comportant divers circuits électroniques de génération d'un signal radiofréquence émis à l'aide d'une antenne.

Le dispositif 30 émet un champ électromagnétique pour initier une communication avec le dispositif 10. Ce champ est capté par ce dispositif 10 dès qu'il se trouve à portée. Le champ est détecté par les circuits d'un bloc 12 du dispositif 10 qui sont réactivés s'ils sont en veille.

Cela se traduit par une variation de la charge constituée par les circuits du dispositif 10 sur un circuit résonant de génération du champ du dispositif 30. En pratique, la variation correspondante de phase ou d'amplitude du champ émis est détectée par le dispositif 30 qui entame alors un protocole de communication sans contact avec le dispositif 10.

Une fois que le dispositif 30 a détecté la présence du dispositif 10 dans son champ, il entame une procédure d'établissement de communication, mettant en oeuvre des émissions de requêtes par le dispositif 30 et de réponses par le dispositif 10.

Un message peut ensuite être transmis au dispositif 30 par le dispositif 10 en modulant, grâce aux circuits du bloc 12, le champ émis par le dispositif 30. Le message à transmettre est par exemple un message stocké dans une mémoire (MEMORY) 14 du dispositif 10.

Le message à transmettre par communication en champ proche comprend , selon l'invention, une partie fixe, ou statique, par exemple l'URL d'un site internet ou une première partie de cet URL, et une partie variable, ou dynamique, par exemple un argument de l'URL ou une deuxième partie de l'URL. Par exemple, pour un message devant être transmis par communication en champ proche ayant la forme suivante : http://www.website.com/?d=12345ABC, la partie statique peut être l'adresse du site http://www.website.com/ et la partie dynamique peut être l'argument "?d=12345ABC". L'argument contient par exemple des informations à transmettre. Le message transmis d'un dispositif à l'autre est un message codé en ASCII code normalisé américain pour l'échange d'information, en anglais "American Standard Code for Information Interchange". Cependant, la partie dynamique du message à transmettre est classiquement dans la mémoire 14 codée en format binaire.

La figure 2 représente, sous forme de blocs et de manière plus détaillée, le dispositif 10 de communication en champ proche de la figure 1. Ce dispositif ne fait pas partie de l'invention.

Le dispositif 10 comprend la mémoire 14 dans laquelle est stocké le message à transmettre.

Plus précisément, la mémoire 14 comprend une zone 18 à accès libre (USER) pouvant être accédée par tous les utilisateurs, et une zone 16 à accès restreint (SYSTEM), contenant des données spécifiques à la puce, dont l'accès est réservé à un mode restreint géré par le dispositif 10 en interne.

Le dispositif 10 peut aussi comprendre des circuits logiques 20 (LOGIC), incluant par exemple un compteur. Par exemple, ce compteur est incrémenté chaque fois qu'un dispositif en mode lecteur accède au message à transmettre.

La partie statique du message à transmettre est stockée dans la zone 18 à accès libre et peut contenir des données en format binaire (BINARY) ou en ASCII. La partie dynamique du message à transmettre est par exemple contenue dans la zone à accès restreint 16. La partie dynamique du message à transmettre peut donc être modifiée par l'ensemble des composants du dispositif.

Les données fournies par les circuits logiques 20 peuvent être stockées dans la zone 16 et peuvent donc être incluses dans la partie dynamique du message stockée dans la mémoire 14. Ces données peuvent aussi être transmises directement aux circuits du bloc 12 sans être stockées dans la mémoire.

La mémoire 14 comprend majoritairement des données codées en format binaire. Plus particulièrement, la partie dynamique du message à transmettre située en zone 16 est stockée en format binaire. De plus, les données fournies par les circuits logiques 20 sont aussi fournies, et éventuellement stockées, en format binaire.

Les différentes parties du message, c'est-à-dire la partie statique, la partie dynamique, et éventuellement les éléments venant directement des circuits logiques 20, sont transmises à un convertisseur (CONVERTER) 22 du bloc 12 qui convertit, à chaque transmission, la partie dynamique du message et les données fournies par les circuits logiques 20 en format ASCII. Les différentes parties du message sont par exemple ensuite concaténées de manière à former le message à transmettre.

Le message est transmis à un bloc (DIGITAL + ANALOG) 24 comprenant par exemple des circuits numériques et analogiques effectuant la transmission du message.

Le convertisseur 22 correspond généralement à une table de conversion, ce qui coûte de l'espace en mémoire. De plus, chaque étape de conversion entraîne un retard pour la transmission du message.

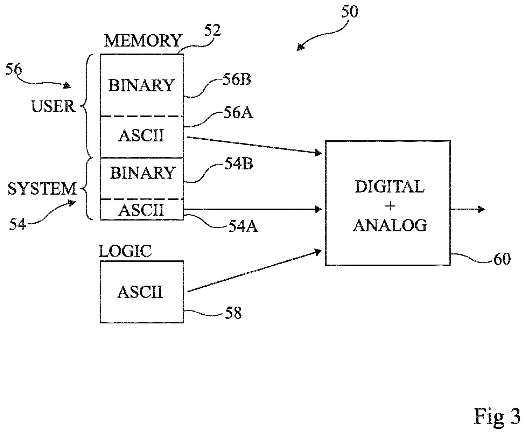

La figure 3 représente, sous forme de blocs, un mode de réalisation d'un dispositif 50 de communication en champ proche selon l'invention.

Le dispositif 50 comprend une mémoire (MEMORY) 52. La mémoire 52 comprend, comme la mémoire 14 de la figure 2, une zone (SYSTEM) 54 dont l'accès est restreint et qui n'est accessible qu'au mode restreint, et une zone (USER) 56 dont l'accès est libre et pouvant être accédée par tous les utilisateurs. La mémoire 52 peut être une mémoire non volatile dans laquelle sont situées les zones 54 et 56. La mémoire 52 peut aussi comprendre une mémoire non volatile dans laquelle est située la zone 54 et une mémoire volatile dans laquelle est située tout ou partie de la zone 56.

Les zones 54 et 56 comprennent chacune une portion auxiliaire 54A ou 56A. La portion 56A de la zone 56 contient par exemple la partie statique du message à transmettre. La portion 54A de la zone 54 contient par exemple la partie dynamique du message.

Selon les modes de réalisation décrits, les portions auxiliaires 54A et 56A contiennent uniquement des données codées en ASCII. Selon l'invention, le message est stocké en ASCII dans la mémoire 52.

Les zones 54 et 56 comprennent aussi chacune une portion auxiliaire 54B ou 56B correspondant au reste de la zone 54 ou 56. Les portions 54B et 56B sont majoritairement en un format autre que l'ASCII, par exemple en format binaire (BINARY).

La portion 54A correspond à moins de 10 % de la taille de la mémoire 52.

Le dispositif 50 comprend aussi des circuits logiques (LOGIC) 58, incluant , selon l'invention, un compteur incrémenté chaque fois qu'un dispositif en mode lecteur accède au message transmis. Les circuits 58 sont câblés pour fournir directement des données en ASCII. Les données manipulées et fournies par le circuit 58 sont donc en ASCII. Selon l'invention, le compteur est incrémenté en ASCII. Les données en ASCII fournies par les circuits logiques 58 sont stockées dans la portion auxiliaire 54A . Dans un mode de réalisation non couvert par l'invention,les données en ASCII peuvent être transmises directement à un bloc (DIGITAL + ANALOG) 60. Le bloc (60) comprend des circuits numériques et analogiques permettant la transmission du message.

Pour de mêmes données, l'espace de stockage en ASCII est deux fois supérieur à l'espace de stockage en binaire. Le message à transmettre correspond par exemple à 28 bits en format binaire et à 56 bits en ASCII. Or, la mémoire 52 comprend par exemple 1 kilobit ou 2 kilobits d'espace. L'augmentation de l'espace dédié à la partie dynamique du message est donc négligeable sur l'ensemble de la mémoire par rapport au gain de temps apporté avantageusement par l'absence d'une étape de conversion à chaque transmission du message.

De plus, la suppression de l'étape de conversion permet de diminuer l'énergie dédiée à la transmission. Il n'est en effet pas nécessaire de fournir de l'énergie au convertisseur.

Des modes de réalisation particuliers ont été décrits. Diverses variantes et modifications apparaîtront à l'homme de l'art, sans sortir du cadre de l'invention tel que défini par les revendications.

En particulier, les zones 54B et 56B peuvent contenir des données codées en un autre langage que le format binaire, par exemple en langage hexadécimal.

## Revendications

1. Dispositif de communication en champ proche, le dispositif étant configuré pour transmettre un message à un autre dispositif, le dispositif comprenant :
un compteur configuré pour s'incrémenter chaque fois que ledit autre dispositif accède au message transmis et pour fournir directement une donnée en ASCII ;
une mémoire (52) configurée pour stocker, en ASCII, le message à transmettre incluant ladite donnée constituant une partie dynamique du message et incluant en outre une partie statique du message en ASCII ; et
un bloc (60) configuré pour acquérir le message en ASCII stocké dans la mémoire et pour transmettre le message en ASCII en champ proche.

2. Dispositif selon la revendication 1, dans lequel la mémoire est en outre configurée pour stocker la partie dynamique du message dans une zone (54) à accès restreint de la mémoire.

3. Dispositif selon la revendication 1 ou 2, dans lequel la mémoire est en outre configurée pour stocker la partie statique du message dans une zone (56) à accès libre de la mémoire.

4. Dispositif selon l'une quelconque des revendications 1 à 3, dans lequel la partie statique du message comprend l'adresse d'un site internet.

5. Dispositif selon l'une quelconque des revendications 1 à 4, dans lequel la mémoire comporte une première partie (54A) configurée pour stocker en ASCII la partie dynamique dudit message à transmettre, la première partie représentant moins de 10 % de la taille de la mémoire.

6. Dispositif selon la revendication 5, dans lequel la mémoire comporte une deuxième partie configurée pour stocker des données codées en langage hexadécimal.

## Patentansprüche

1. Nahfeld-Kommunikationsvorrichtung, wobei die Vorrichtung so konfiguriert ist, dass sie eine Nachricht an eine andere Vorrichtung überträgt, wobei die Vorrichtung Folgendes aufweist:
einen Zähler, der so konfiguriert ist, dass er jedes Mal, wenn die andere Vorrichtung auf die zu übertragende Nachricht zugreift, inkrementiert und Daten in ASCII liefert;
einen Speicher (52), der so konfiguriert ist, dass er die zu übertragende Nachricht in ASCII speichert, einschließlich der Daten, die einen dynamischen Teil der Nachricht bilden, und ferner einschließlich eines statischen Teils der Nachricht in ASCII; und
einen Block (60), der so konfiguriert ist, dass er die im Speicher gespeicherte Nachricht in ASCII erfasst und die Nachricht in ASCII im Nahfeld überträgt.

2. Vorrichtung nach Anspruch 1, wobei sich der dynamische Teil in einem Bereich (54) des Speichers mit beschränktem Zugriff befindet.

3. Vorrichtung nach Anspruch 1 oder 2, wobei sich der statische Teil in einem freien Zugriffsbereich (56) des Speichers befindet.

4. Vorrichtung nach einem der Ansprüche 1 bis 3, wobei der statische Teil die Adresse einer Website aufweist.

5. Vorrichtung nach einem der Ansprüche 1 bis 4, wobei der Speicher einen ersten Teil (54A) aufweist, der den variablen Teil der zu übertragenden Nachricht in ASCII speichert, wobei der erste Teil weniger als 10% der Speichergröße ausmacht.

6. Vorrichtung nach Anspruch 5, wobei der Speicher einen zweiten Teil aufweist, der in hexadezimaler Sprache codierte Daten speichert.

## Claims

1. A near-field communication device, the device being configured to transmit a message to another device, the device comprising:
a counter configured to increment each time said other device accesses the message to be transmitted and to supply data in ASCII;
a memory (52) configured to store, in ASCII, the message to be transmitted including said data constituting a dynamic portion of the message and further including a static portion of the message in ASCII; and
a block (60) configured to acquire the massage in ASCII stored in the memory and to transmit the message in ASCII in near field.

2. The device of claim 1, wherein the dynamic portion is in a restricted access area (54) of the memory.

3. The device of claim 1 or 2, wherein the static portion is in a free access area (56) of the memory.

4. The device of any of claims 1 to 3, wherein the static portion comprises the address of a website.

5. The device of any of claims 1 to 4, wherein the memory comprises a first portion (54A) storing in ASCII the variable portion of said message to be transmitted, the first portion representing less than 10% of the memory size.

6. The device of claim 5, wherein the memory comprises a second portion storing data coded in hexadecimal language.
